# FASCICULE DE BREVET EUROPEEN

(11) **EP 3 132 018 B1**
(45) Date de publication et mention de la délivrance du brevet: **06.06.2018**
(21) Numéro de dépôt: 15719792.2
(22) Date de dépôt: 02.04.2015
(51) Int. Cl.: C12H 1/22

(54) **CUVE DE VINIFICATION EN MATERIAU MAGMATIQUE**
TANK ZUR WEINHERSTELLUNG AUS EINEM MAGMAMATERIAL
WINEMAKING TANK MADE OF A MAGMATIC MATERIAL

(30) Priorité: 15.04.2014 FR 1453369
(43) Date de publication de la demande: 22.02.2017
(73) Titulaire: Mostert, Wayne, 24750 Boulazac (FR)
(72) Inventeur: Mostert, Wayne, 24750 Boulazac (FR)
(74) Mandataire: Breesé, Pierre
(86) Numéro de dépôt international: PCT/FR2015/050865
(87) Numéro de publication internationale: WO 2015/158981

(56) Documents cités:
- DE-U1-202013 011 467
- FR-A- 1 031 383
- KR-A- 20110 139 852
- "Natursteintröge, Mühlsteine, Steintröge", INTERNET CITATION, 2004, pages 1-3, XP002713169, Extrait de l'Internet: URL:http://www.dersteinmann.de/index.html [extrait le 2013-09-18]

## Description

### DOMAINE TECHNIQUE DE L'INVENTION

L'invention concerne le domaine de la vinification et de l'élevage des vins. Elle concerne plus particulièrement une cuve de vinification.

### ETAT DE LA TECHNIQUE

Suivant les pays, le climat et la « philosophie » de l'exploitation agricole (élaboration traditionnelle, rendement, etc.), les cuves utilisées peuvent être réalisées en différents matériaux de base.

Les cuves traditionnellement utilisées sont les cuves en bois de chêne. De telles cuves permettent une oxygénation modérée du vin. Elles confèrent également un goût boisé au vin et interviennent dans la polymérisation des tanins pour parvenir à des vins généralement plus ronds. De telles cuves offrent cependant une capacité limitée et restent somme toute onéreuses du fait du matériau de base utilisé. En outre, elles restent difficiles à désinfecter, les produits de désinfection existant présentant de manière générale une efficacité limitée.

En alternative des cuves en bois de chêne, sont utilisées des cuves réalisées en acier inoxydable, en acier revêtu, en béton et en plastique. Si ces matériaux présentent certains avantages, ils présentent également un certain nombre d'inconvénients. DE 20 2013 011467 divulgue une cuve de vinification étant réalisée en matériau magmatique (basalte ou granite).

Les cuves en inox présentent l'avantage d'être neutres et sans influence directe sur le vin stocké dans celles-ci. En outre, elles sont faciles d'entretien de sorte que le risque de proliférations bactériennes y est quasiment nul. Elles présentent cependant l'inconvénient de présenter une conductivité thermique élevée de sorte qu'il est nécessaire de recourir à des techniques complémentaires pour maitriser les températures aux fins de la fermentation du vin (ruissellement, ceinturage, etc.). Le vin stocké dans de telles cuves est en outre placé dans des conditions très réductrices, ce qui a pour conséquence de donner fréquemment des odeurs soufrées très désagréables, souvent proches d'une odeur d'« oeuf pourri ». En outre, l'acier inoxydable reste un matériau onéreux.

Les cuves en acier revêtu présentent l'avantage de préserver l'arôme du vin. Cependant le nettoyage de telles cuves se révèle difficile. En effet, lors du stockage du vin dans la cuve, des dépôts vineux se déposent sur les parois intérieures de celle-ci, dépôt qu'il convient d'enlever régulièrement afin d'éviter toutes prolifération bactérienne. Le retrait de ces dépôts est réalisé en général par grattage. Or, il est fréquent que l'opération de grattage endommage le revêtement ce qui peut, non seulement conduire potentiellement à une prolifération de bactéries, mais également influer sur la qualité de la fonction de barrière du revêtement. Le vin stocké dans une cuve présentant un revêtement endommagé peut donc perdre sa qualité. Par ailleurs, il prend en général un mauvais goût. Les cuves en acier revêtu imposent donc des contrôles réguliers tant sur le plan de son étanchéité que sur celui de son hygiène. En outre, de telles cuves présentent, comme les cuves en inox, une conductivité thermique élevée.

Les cuves en béton présentent l'avantage d'offrir une bonne inertie thermique. Elles permettent de maintenir des températures stables dans le vin sans nécessiter de grandes dépenses énergétiques. Cependant, afin de permettre le stockage du vin, les cuves en béton doivent être pourvues d'un revêtement intérieur. Elles présentent donc les mêmes inconvénients que ceux rencontrés avec les cuves en acier revêtu lié au revêtement intérieur et à son nettoyage et sa désinfection (risque de détérioration). Les cuves en béton imposent donc des contrôles réguliers tant sur le plan de son étanchéité que sur celui de son hygiène.

Les cuves en plastique (notamment en polyester) présentent l'avantage d'être peu onéreuses et d'offrir des formes et des volumes variables. L'innocuité de ce type de cuve par rapport au vin reste cependant moyenne. En outre, celles-ci s'altèrent dans le temps, ce qui peut conduire à une perte en qualité du vin stocké. Par ailleurs, lorsque le vin est stocké pendant trop longtemps dans des cuves en plastique, il finit également par s'altérer. En outre, les cuves en plastique présentent également une conductivité thermique élevée.

L'invention vise à remédier à ces problèmes en proposant une cuve de vinification présentant une faible inertie thermique, et assurant une prolifération bactérienne limitée tout en préservant les arômes naturels du vin contenu dans la cuve.

L'invention vise également à proposer une cuve de vinification résistante dans le temps et ne nécessitant aucun traitement préalable pour le stockage de vins.

### OBJET DE L'INVENTION

A cet effet, et selon un premier aspect, l'invention propose une cuve pour vinifier du vin comprenant un corps creux monolithique pour le stockage du vin présentant une paroi interne lisse, de section circulaire ou ovale non constante, délimitant un espace de stockage du vin, le corps creux étant réalisé en matériau magmatique.

On entend par « section circulaire ou ovale non constante », un corps présentant une section circulaire ou ovale variant suivant son axe longitudinal.

On entend par « paroi lisse » une paroi non poreuse. Le caractère lisse de la paroi interne du corps creux peut être obtenu par polissage de la paroi.

La combinaison du matériau (matériau magmatique lequel a une faible inertie thermique), de la qualité de la paroi interne de la cuve avec laquelle le vin est en contact (paroi lisse) et la forme de celle-ci (forme, circulaire ou ovale et non constante) permet d'amplifier le phénomène d'agitation naturellement obtenue et ainsi de mélanger le vin, et ce de manière homogène.

A cela s'ajoute les avantages propres au matériau magmatique lui-même. En particulier, l'un des avantages d'un matériau magmatique est de permettre un poli, avantageusement brillant, de façon à améliorer son caractère non perméable ainsi que sa dureté. En outre, étant non poreux, il n'impose pas d'avoir recours à une couche de protection et reste relativement inaltérable. De ce fait, le risque que la cuve soit soumise à une prolifération bactérienne est limité. Il offre en outre une durée de vie beaucoup plus longue que les matériaux à ce jour utilisés pour la réalisation des cuves de vinification, lesquels présentent généralement une certaine porosité. Par ailleurs, étant inerte, il permet de préserver les arômes naturels du vin contenu dans la cuve.

Avantageusement, le matériau de la cuve est du basalte ou du granite.

Avantageusement, la paroi interne est agencée pour délimiter un espace de réception en forme d'ovoïde, de préférence inversée. L'avantage de cette forme est qu'elle favorise le mouvement de convexion naturelle. Cela permet ainsi de renforcer l'efficacité de l'opération de bâtonnage lorsque celle-ci est réalisée.

Avantageusement, le corps creux présente une paroi externe en forme ovale, et de préférence en forme d'ovoïde.

Avantageusement, la cuve comporte un socle supportant le corps creux. Selon un mode de réalisation avantageux, le socle est formé d'un seul tenant avec le corps creux.

### BREVE DESCRIPTION DES FIGURES

D'autres objets et avantages de l'invention apparaîtront au cours de la description qui suit, faite en référence aux dessins annexés, dans lesquels :
- la figure 1 représente une vue schématique de devant d'une cuve de vinification selon l'invention ;
- la figure 2 représente une vue en coupe de la cuve de vinification selon l'axe II-II ;
- la figure 3 représente une vue en coupe de la cuve de vinification de la figure 2 selon l'axe III-III ;
- la figure 4 représente une vue en coupe de la cuve de vinification de la figure 2 selon l'axe IV-IV.

### DESCRIPTION DETAILLEE DES FIGURES

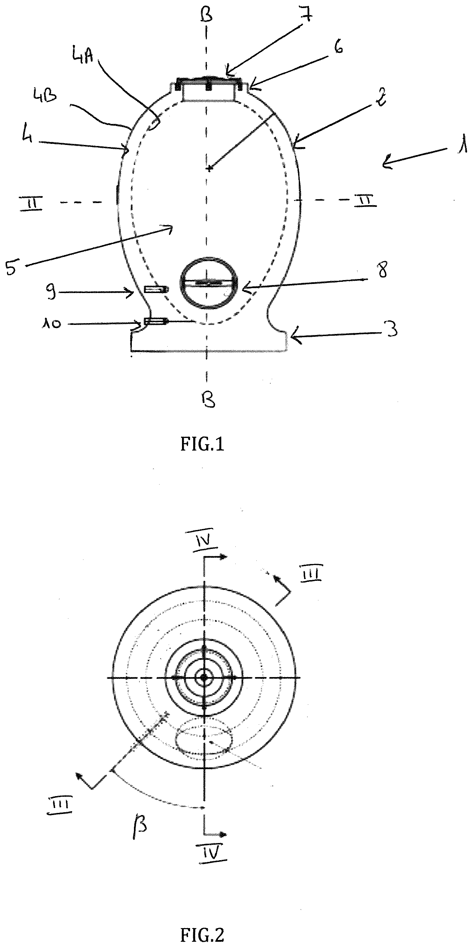

En relation avec les figures 1 à 4, il est décrit une cuve 1 destinée à la vinification de vin comprenant un corps creux 2 monolithique et un socle 3 supportant le corps creux 2. Dans le mode de réalisation illustré, le corps creux 2 est formé d'un seul tenant avec le socle 3. Il est bien entendu évident que le socle 3 peut être une pièce distincte du corps creux 2 sans sortie du cadre de l'invention.

On désignera la cuve 1 destinée à la vinification de vin indifféremment par « cuve de vinification 1 » et « cuve 1 ».

Le corps creux 2 de la cuve 1 présente une paroi interne 4A délimitant un espace de stockage 5 du vin. Afin de favoriser le mouvement du vin intervenant dans la cuve 1, mouvement qui sera décrit plus loin, la paroi interne 4A est lisse.

La paroi interne 4A du corps creux 2 est configurée pour délimiter un espace de réception 5 en forme d'ovoïde inversée. Cette forme d'ovoïde, ou forme ovale avec un seul axe de symétrie, inversée permet, comme cela sera décrit en détail plus loin, de favoriser une agitation naturelle du vin contenu dans la cuve 1.

Avantageusement, la paroi externe 4B est de forme également ovoïdale. Contrairement à la paroi interne 4A, elle n'est pas inversée de sorte que la paroi latérale 4 du corps creux 2 présente une épaisseur croissant en direction du socle 3 de la cuve 1. Il est bien entendu évident que la cuve n'est pas limitée à une telle forme et qu'elle peut présenter une paroi externe 4B de forme quelconque. Selon une configuration particulière, le corps creux 2 sera arrangé pour présenter une géométrie en accord avec le nombre d'or.

Le corps creux 2 est réalisé en matériau magmatique, comme par exemple du basalte ou du granite. L'utilisation de ce type de matériau a pour avantage de limiter les échanges thermiques ainsi que la prolifération bactérienne. En outre, il permet de limiter les interactions entre le corps creux 2 lui-même et le vin contenu dans ce dernier. Les arômes naturels du vin sont ainsi préservés.

Avantageusement, le corps creux 2 présente en partie supérieure (extrémité opposée au socle 3) une collerette 6 délimitant une ouverture pour le passage du vin à vinifier dans l'espace de stockage 5. L'ouverture est obturée par un couvercle 7 amovible monté sur la collerette 6. La disposition de l'ouverture en partie supérieure du corps creux 2 permet le remplissage de la cuve avec un écoulement tourbillonnant du vin, assurant ainsi l'homogénéisation de ce dernier.

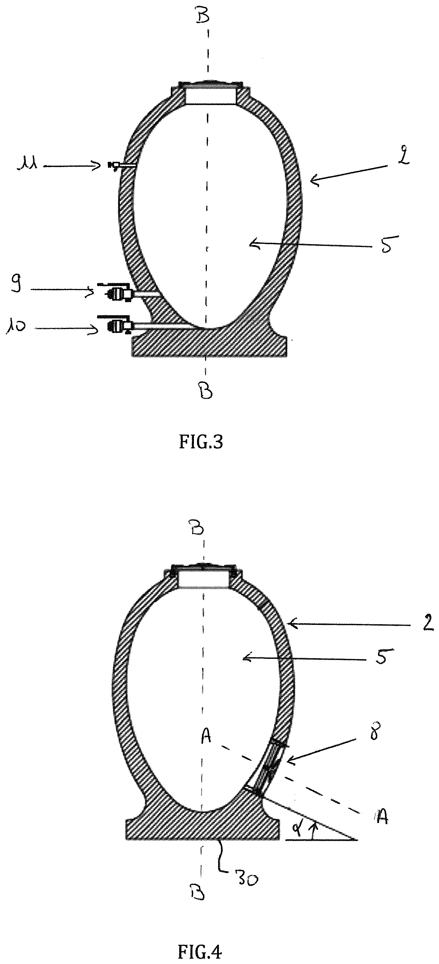

La cuve 1 comporte en outre des moyens 9, 10, 11 permettant l'extraction du vin de l'espace de stockage 5. Plus particulièrement, la cuve 1 comporte des premier et deuxième moyens destinés respectivement à la vidange et au tirage au clair. Comme illustrée sur la figure 2, lesdites moyens 9, 10 sont contenus dans un plan passant par l'axe longitudinal BB du corps creux 2 et s'étendent dans une même direction. Comme illustré sur cette même figure, lesdites moyens 9, 10 sont écartées angulairement d'un angle β de l'ordre de 45 degrés. L'un des moyens 9, 10 est disposé pour s'étendre depuis le fond 50 de l'espace de stockage 5. La cuve 1 comporte en outre un troisième moyen 11 pour tirer du vin aux fins de sa dégustation. Dans le mode de réalisation illustré, le troisième moyen 11 est placé dans le même plan que celui contenant les premier et deuxième moyens 9, 10 (figure 3). Le troisième moyen 11 est situé à une hauteur supérieure à la hauteur correspondant à la moitié de l'espace de stockage 5 de la cuve 1.

La cuve de vinification 1 comporte en outre une porte 8 pour permettre le nettoyage de la cuve 1. La porte 8 est placée en partie basse, à proximité du socle 3 de la cuve 1. Plus particulièrement, et comme représenté sur la figure 4, la porte 8 est placée de manière à définir un axe d'entrée AA présentant un écartement angulaire α par rapport à un plan correspondant à la face inférieure 30 du socle 3 compris entre 10 et 20 degrés. Dans le mode de réalisation illustré, l'écartement angulaire α est de l'ordre de 25 degrés. On entend par « face inférieure » la face du socle 3 en appui sur le sol. On entend par « axe d'entrée », l'axe sensiblement perpendiculaire à la paroi latérale 4 du corps creux 2.

Du fait de la forme de la cuve de vinification 1 et du matériau dans laquelle elle est réalisée, le vin, lorsqu'il est placé dans l'espace de stockage 5, subit une agitation douce due à la convection naturelle. Cette agitation est crée par la différence de température existant entre la paroi 4 de cuve 1 et le vin. Le changement de température de la paroi de la cuve 1 va influencer la couche de vin située au voisinage de la paroi interne 4A et ainsi changer la température de celle-ci, pour modifier alors la densité de ce vin au voisinage de la paroi interne 4A. Cette différence de densité se traduira par la remontée ou la descente du vin au voisinage de la paroi interne 4A de la cuve 1. Ainsi, lorsque la paroi interne 4A de la cuve de vinification 1 présente une température inférieure à celle du vin, ce dernier, au voisinage de la paroi interne 4A, va se refroidir. De ce refroidissement, il résulte une augmentation de la densité du vin. Du fait de la forme en ovoïde de la paroi interne 4A, la couche de vin à proximité de la paroi interne 4A converge vers le fond en direction du centre, poussant un filet de courant central vers le haut selon une direction sensiblement verticale. A l'inverse, lorsque la paroi interne 4A de la cuve de vinification 1 présente une température supérieure à celle du vin, ce dernier, au voisinage de la paroi interne 4A, va se réchauffer par transfert de chaleur. De ce réchauffement, il résulte une diminution de la densité. La couche de vin à proximité de la paroi interne 4A converge vers le haut en direction du centre, poussant un filet de courant central vers le bas selon une direction sensiblement verticale. Ce processus se poursuivra, entraîné uniquement par la température ambiante dans la cave qui fluctue au jour le jour et avec le changement des saisons. L'agitation ainsi obtenue est assimilable à un bâtonnage doux.

La forme ovoïdale de la paroi intérieure empêche ainsi le vin de se trouver dans un état stagnant dans l'ensemble de l'espace de stockage 5 de la cuve de vinification 1, aidant ainsi à prévenir la croissance de bactéries pathogènes. La forme évite la formation de zones mortes dans lesquelles le vin ne serait pas mis au contact des lies.

Dans le mode de réalisation précédemment décrit, la cuve de vinification 1 comporte une porte 8. Il est bien entend évident que la cuve selon l'invention peut être prévue sans porte.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Cuve de vinification (1) comprenant un corps creux (2) monolithique pour le stockage du vin présentant une paroi interne (4A) lisse, de section circulaire ou ovale non constante, délimitant un espace de stockage (5) du vin, le corps creux (2) étant réalisé en matériau magmatique.

2. Cuve de vinification (1) selon la revendication 1, **caractérisée en ce que** le matériau est du basalte.

3. Cuve de vinification (1) selon la revendication 1, **caractérisée en ce que** le matériau est du granite.

4. Cuve de vinification (1) selon l'une quelconque des revendications précédentes, **caractérisée en ce que** la paroi interne (4A) est agencée pour délimiter un espace de réception en forme d'ovoïde inversée.

5. Cuve de vinification (1) selon l'une quelconque des revendications précédentes, **caractérisée en ce que** le corps creux (2) présente une paroi externe de forme ovoïdale.

6. Cuve de vinification (1) selon l'une quelconque des revendications précédentes, **caractérisée en ce que** la cuve (1) comporte un socle (3) supportant le corps creux (2).

7. Cuve de vinification (1) selon la revendication précédente, **caractérisée** en ce le socle (3) est formé d'un seul tenant avec le corps creux (2).

## Patentansprüche

1. Weingärbehälter (1), bestehend aus einem monolithischen Hohlkörper (2) zur Lagerung von Wein, der eine glatte Innenwand (4A) mit nicht konstantem rundem oder ovalem Querschnitt aufweist, welche einen Lagerbereich (5) für Wein abgrenzt, wobei der Hohlkörper (2) aus magmatischem Material gefertigt ist.

2. Weingärbehälter (1) nach Anspruch 1, **dadurch gekennzeichnet, dass** das Material Basalt ist.

3. Weingärbehälter (1) nach Anspruch 1, **dadurch gekennzeichnet, dass** das Material Granit ist.

4. Weingärbehälter (1) nach einem der vorhergehenden Ansprüche, **dadurch gekennzeichnet, dass** die Innenwand (4A) so angeordnet ist, dass sie einen umgekehrt eiförmigen Aufnahmebereich abgrenzt.

5. Weingärbehälter (1) nach einem der vorhergehenden Ansprüche, **dadurch gekennzeichnet, dass** der Hohlkörper (2) eine eiförmige Außenwand aufweist.

6. Weingärbehälter (1) nach einem der vorhergehenden Ansprüche, **dadurch gekennzeichnet, dass** der Behälter (1) einen Sockel (3) umfasst, welcher den Hohlkörper (2) trägt.

7. Weingärbehälter (1) nach dem vorhergehenden Anspruch, **dadurch gekennzeichnet, dass** der Sockel (3) und der Hohlkörper (2) aus einem Stück geformt sind.

## Claims

1. A winemaking tank (1) comprising a monolithic hollow body (2) for storing wine having a smooth inner wall (4A), with a non-constant circular or oval section, defining a storage space (5) for the wine, with the hollow body (2) being made of magmatic material.

2. A winemaking tank (1) according to claim 1, **characterized in that** the material is basalt.

3. A winemaking tank (1) according to claim 1, **characterized in that** the material is granite.

4. A winemaking tank (1) according to any one of the preceding claims, **characterized in that** the inner wall (4A) is so arranged as to define a receiving space having the shape of a reversed ovoid.

5. A winemaking tank (1) according to any one of the preceding claims, **characterized in that** the hollow body (2) has an outer wall with an ovoid shape.

6. A winemaking tank (1) according to any one of the preceding claims, **characterized in that** the tank (1) comprises a base (3) supporting the hollow body (2).

7. A winemaking tank (1) according to the preceding claim, **characterized in that** the base (3) is formed integrally with the hollow body (2).
